(19) Europäisches Patentamt
European Patent Office
Office européen des brevets

(11) Veröffentlichungsnummer: **0 011 212**
**B1**

(12) **EUROPÄISCHE PATENTSCHRIFT**

(45) Veröffentlichungstag der Patentschrift: **12.05.82**

(51) Int. Cl.³: **C 08 F 12/26,** C 08 F 12/34, C 08 F 20/60

(21) Anmeldenummer: **79104313.6**

(22) Anmeldetag: **05.11.79**

(54) **Aromatische Azomethingruppen enthaltende Polymerisate.**

(30) Priorität: **11.11.78 DE 2849112**

(43) Veröffentlichungstag der Anmeldung: **28.05.80 Patentblatt 80/11**

(45) Bekanntmachung des Hinweises auf die Patenterteilung: **12.05.82 Patentblatt 82/19**

(84) Benannte Vertragsstaaten: **BE DE FR GB**

(56) Entgegenhaltungen: **keine**

(73) Patentinhaber: **BASF Aktiengesellschaft, Carl-Bosch-Strasse 38, D-6700 Ludwigshafen (DE)**

(72) Erfinder: **Naarmann, Herbert, Dr., Haardtblick 15, D-6719 Wattenheim (DE)**
Erfinder: **Wulff, Guenter, Dr., Auf dem Patt 12, D-5305 Alfter-Impekoven (DE)**
Erfinder: **Akelah, Ahmed, Dr., El Amam Ali Street 20, Kafer el Zyat (EG)**

EP 0 011 212 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Aromatische Azomethingruppen enthaltende Polymerisate

Die Erfindung betrifft neue Polymerisate, die aromatisch gebundene Azomethingruppen enthalten.

Aus der Literaturstelle »Chemical Abstracts« 79, Nr. 12, Nr. 66839t ist es bereits bekannt, Azomethinderivate der allgemeinen Formel:

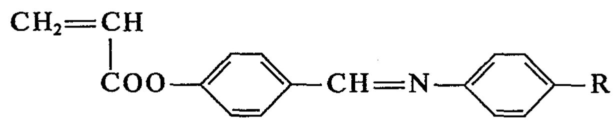

zu polymerisieren, wobei über die Eigenschaften und Konsistenz dieser Polymerisate nichts ausgesagt ist.

Der Erfindung lag die Aufgabe zugrunde, Polymerisate zu schaffen, die aromatisch gebundene Azomethingruppen enthalten und darüber hinaus technisch verwertbare Eigenschaften wie gute Reaktivität, gute oberflächenaktive Eigenschaften und Verwendbarkeit für die Herstellung von Formkörpern, Überzügen oder Klebemitteln aufweisen.

Die Aufgabe wurde gelöst durch Polymerisate mit K-Werten von 20 bis 140, die Struktureinheiten der allgemeinen Formel (I):

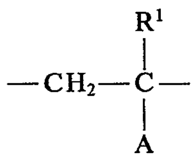

I

enthalten, worin

$R^1$ = H oder $CH_3$

A = 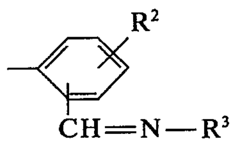 oder 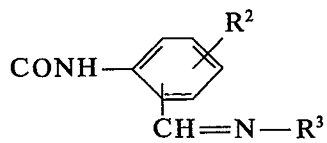

wobei

$R^2$ = H, OH, O-Alkyl, Alkoxyalkyl oder $O-Si(CH_3)_3$ und

$R^3$ = OH, $NH-CO-NH_2$, $C_1$- bis $C_{12}$-Alkyl, $C_6$- bis $C_{12}$-Cycloalkyl, $C_6$- bis $C_{14}$-Aryl oder

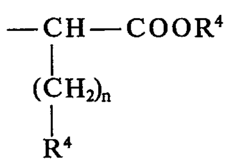

worin

$R^4$ = $C_1$- bis $C_{12}$-Alkyl, $C_6$- bis $C_{12}$-Cycloalkyl und $C_6$- bis $C_{14}$-Aryl und n = 0 oder 1

bedeuten.

Die Polymerisate können entweder Homopolymerisate mit wiederkehrenden Einheiten der allgemeinen Formel (I) oder Copolymerisate sein, welche die Einheiten der Formel (I) und andere Struktureinheiten einpolymerisiert enthalten, die von einer oder mehreren copolymerisierbaren olefinisch ungesättigten Verbindungen abstammen.

Bevorzugt sind Polymerisate, deren Rest $R^2$ = H oder OH und deren Rest $R^3$ = OH, $NH-CO-NH_2$,

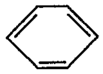 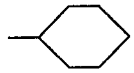 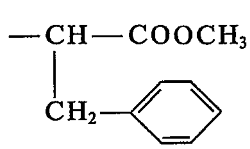 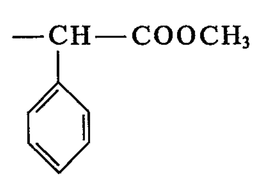

oder

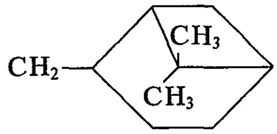

ist.

Bevorzugte Copolymerisate sind diejenigen, die als copolymerisierbare olefinisch ungesättigte Verbindungen Styrol oder Acrylsäureester enthalten.

Unter Polymerisaten mit K-Werten von 20 bis 140, die Struktureinheiten der allgemeinen Formel (I) enthalten, werden oligomere und makromolekulare Stoffe verstanden, die ganz oder im wesentlichen oder teilweise aus wiederkehrenden Einheiten der Formel

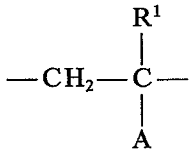

bestehen, worin der Formelteil $-CH_2-C-$ ein Teil der Polymerisatkette ist. Die Polymerisate enthalten in der Seitenkette als Substituenten den Rest $R^1$ und den oben definierten Seitenzweig A. Die allgemeine Formel beschreibt also Homopolymerisate, die nur die oben angeführten Strukturelemente (I) enthalten, als auch Copolymerisate mit einpolymerisierten copolymerisierbaren olefinisch ungesättigten Verbindungen.

Unter K-Wert der Polymerisate wird die technische Kerngröße verstanden, die zur Charakterisierung des Polymerisationsgrads eines Polymerisats üblich ist. Die K-Werte der erfindungsgemäßen Polymerisate wurden nach H. Fikentscher, Cellulosechemie 13 (1932), Seiten 58 bis 64 und 71 bis 74, eingewichtsprozentig in Dimethylformamid bei einer Temperatur von 25° C gemessen; dabei bedeutet $K = k \cdot 10^3$.

Die erfindungsgemäßen Polymerisate werden hergestellt durch Homopolymerisation der Verbindungen (II)

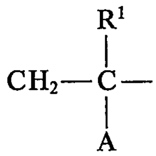

II

in denen $R^1$ und A die oben angeführte Bedeutung haben oder durch Copolymerisation einer Verbindung der allgemeinen Formel (II) mit einem oder mehreren, mit (II) copolymerisierbaren olefinisch ungesättigten Monomeren in Gegenwart von Radikale bildenden Initiatoren.

Die Verbindungen der Formel (II) sind Azomethine, die an sich bekannt sind und nach der allgemeinen Synthese aus Aldehyden und Aminen hergestellt werden (vgl. Houben – Weyl 15/1, Seite 295 bis 294 [1974], Georg Thieme Verlag Stuttgart und J. C. Sheehan u. V. J. Grenda J. Amer. Chem. Soc. 84, Seiten 2417 bis 2420 [1962]).

Die Reaktion des Aldehyds, die zu den Azomethinen führt, ist allgemein bekannt und im Lehrbuch von H. R. Christen »Grundlagen der organischen Chemie« Seite 515 (1970), Verlag Sauerländer Aarau, beschrieben.

Besonders geeignete olefinisch ungesättigte Monomere der Verbindungsklasse (II) sind die Verbindungen III bis XII:

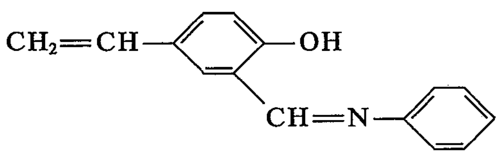

III

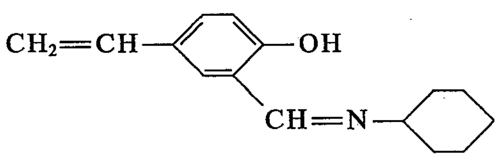

VI

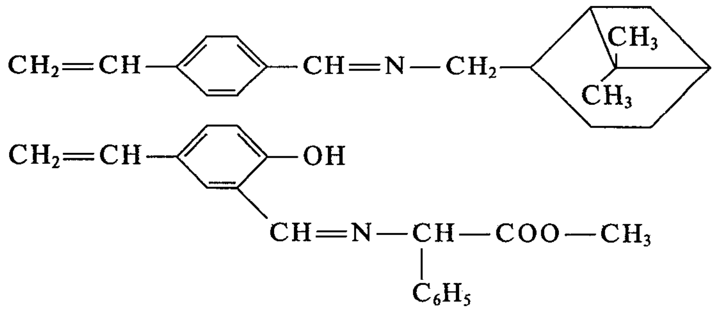

V

VI

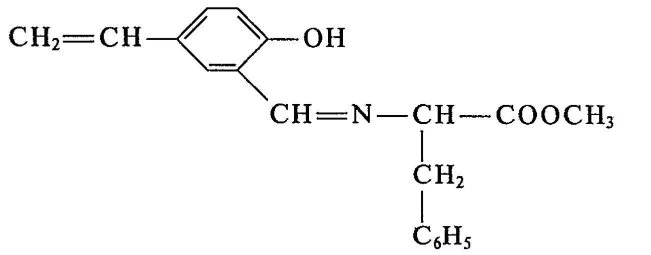

VII

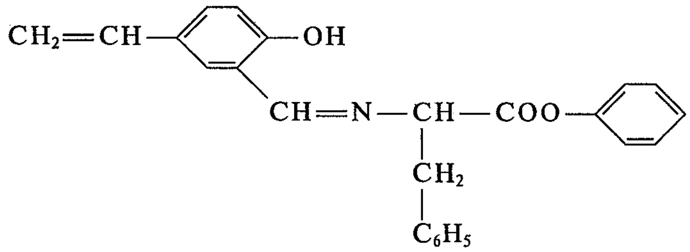

VIII

wobei die Verbindungen V, VI und VII bevorzugt sind.

Die Monomeren der Formel II können jeweils für sich alleine polymerisiert werden. Selbstverständlich ist es auch möglich, Gemische verschiedener dieser Verbindungen zu copolymerisieren. Außerdem sind die der Copolymerisation mit anderen olefinisch ungesättigten Monomeren zugänglich.

Geeignete olefinisch ungesättigte Comonomere die gegebenenfalls mit den genannten erfindungsgemäßen Derivaten der Formeln II copolymerisiert werden können, sind beispielsweise Olefine, wie Äthylen, Propylen, Butadien, Isopren; Styrol und substituierte Styrole, wie α-Methylstyrol, p-Chlorstyrol und p-Methylstyrol; Acryl- und Methacrylsäureester, beispielsweise des Methanols, Äthanols, Butanols oder Äthylcyclohexanols, Äthylenglykols, Propylenglykols-1,2, Butylenglykol-1,3 oder des Butylenglykols-1,4; Acryl- und Methacrylsäureamid und substituierte Amide, wie N-Methylolacrylamid oder deren Äther, wie N-Methylolacrylamidbutyläther, N-Methylolmethacrylamidmethyläther; Acryl- und Methacrylnitril; Vinylester wie Vinylacetat, Vinylpropionat; Vinyläther wie Methyl-, Äthyl- oder Alkylvinyläther mit Alkylresten mit 3 bis 6 Kohlenstoffatomen; ferner Fumar-, Malein- oder Itaconsäure, Ester dieser Säuren und Maleinsäureanhydrid. Von den vorstehend genannten Verbindungen können auch gleichzeitig zwei oder mehr mit den genannten erfindungsgemäßen Monomeren copolymerisiert werden.

Für die Herstellung von Copolymerisaten kann der Anteil an olefinisch ungesättigten aromatischen Azomethinderivaten (II) im Monomerengemisch in weiten Grenzen schwanken, beispielsweise zwischen 1 und 99, insbesondere zwischen 5 und 80, vorzugsweise zwischen 8 und 60 Gew.-%, bezogen auf das Gesamtgewicht der Monomeren.

Zur Auslösung der Polymerisation werden übliche Radikale bildende Initiatoren verwendet. Geeignete Initiatoren sind beispielsweise Wasserstoffperoxid, organische Hydroperoxide und Peroxide, wie Capropylperoxid, Lauroylperoxid, t-Butylperbenzonat, Dicumylperoxid, p-Methanhydroperoxid, Cumolhydroperoxid, Bernsteinsäureperoxid, derner unter Polymerisationsbedingungen in Radikale zerfallende aliphatische Azoverbindungen, wie 2,2′-Azo-bis-2,4-dimethyl-valeronitril, 2,2′-Azo-bis-isobutyronitril und analoge Azonitrile, die beispielsweise in J. Hine Reaktivität und Mechanismus in der organischen Chemie, Verlag Georg-Thieme, Stuttgart (1960), Seite 412, aufgeführt sind sowie übliche Redoxkatalysatorsysteme, wie die Systeme Kalium- oder Ammoniumpersulfat und Ascorbinsäure, Natriumhydrosulfit oder Eisen-II-salze.

Geeignet sind ferner die als Radikalbildner bekannten Chelate von Übergangsmetallen, wie Chelate des Mangan(III), Kobalt(III), Kupfer(II) und Cer(IV). Im allgemeinen werden als Chelatbildner 1,3-Dicarbonylverbindungen verwendet. Als Beispiele seien genannt Mangan(III)-acetylacetonat und Kobalt(III)-acetessigester. Außerdem kann die Polymerisation auch durch Strahlung, gegebenenfalls

in Gegenwart von Sensibilisatoren, wie Benzoinderivaten, ausgelöst werden.

Die Initiatoren werden im allgemeinen in einer Menge von 0,05 bis 5 Gew.-%, vorzugsweise 0,1 bis 1,0 Gew.-%, bezogen auf die Monomerenmenge, verwendet. Die optimale Menge und der optimal wirksame Initiator lassen sich durch Versuche leicht ermitteln. Die Polymerisation kann in Substanz durchgeführt werden. Vorteilhaft arbeitet man jedoch in Gegenwart von Lösungs- oder Verdünnungsmitteln. Geeignet sind beispielsweise Ketone, wie Methyläthyl- oder Methylpropylketon, Äther wie Diäthyläther, Tetrahydrofuran oder Dioxan; aliphatische, cycloaliphatische oder aromatische Kohlenwasserstoffe, wie Hexan, Heptan, Cyclohexan, Benzol oder Toluol, gut geeignet ist auch Dimethylformamid.

Die für eine Vielfalt anderer Monomerer oder Monomerengemische üblichen Suspensions- oder Lösungspolymerisationsverfahren sind auch für das neue Verfahren geeignet. Auch bezüglich der gegebenenfalls verwendeten Hilfsmittel, wie Dispergiermittel, Schutzkolloide und dergleichen unterscheidet sich das neue Verfahren nicht von bekannten.

Die Polymerisation kann in einem weiten Temperaturbereich, etwa zwischen 0 und 150° C, vorzugsweise zwischen 50 und 120° C, bei Reaktionszeiten von 1 bis 20 Stunden, vorzugsweise 2 bis 10 Stunden durchgeführt werden. Man arbeitet im allgemeinen bei Atmosphärendruck, doch können auch höhere Drucke angewendet werden. Insbesondere bei Copolymerisationen mit niedrigsiedenden Comonomeren ist die Verwendung von höheren Drucken angezeigt, um eine ausreichende Konzentration des Comonomeren im Reaktionsgemisch zu bewirken.

Die Copolymerisation der olefinisch ungesättigten Verbindungen (II) mit Äthylen oder Butadien wird vorteilhaft in aliphatischen oder aromatischen Lösungsmitteln durchgeführt, indem man die miteinander copolymerisierbaren Monomeren in das Lösungsmittel, das einen Initiator enthält, einbringt und bei erhöhtem Druck, bei Äthylen als Comonomeren bis etwa 2000 atü, polymerisiert

Die Copolymerisation mit Acrylsäureestern wird zweckmäßig in aromatischen oder aliphatischen Kohlenwasserstoffen unter den für die Polymerisation von Acrylsäureestern bekannten Bedingungen durchgeführt.

Aufgrund der Azomethingruppe in der Seitenkette sind diese Polymerisate reaktiv und gegebenenfalls weiteren Reaktionen zugänglich. Die Polymerisate können beispielsweise intermolekular vernetzt, pfropfpolymerisiert oder vulkanisiert werden. Ferner ist es möglich, die Azomethingruppe durch geeignete Reaktionspartner, wie Diamine, zu modifizieren.

Die erfindungsgemäßen Polymerisate, die K-Werte von 20 bis 140, vorzugsweise von 50 bis 90 aufweisen, sind aufgrund ihres Gehaltes an Azomethingruppen leicht vernetzbar. Sie werden beispielsweise für die Herstellung von Formkörpern, schlagfesten Massen, Überzügen oder Klebemitteln, auch im Gemisch mit anderen Kunststoffen, z. B. mit Polyäthylen, Polypropylen oder mit Mischpolymerisaten aus Vinylacetat und Äthylen, verwendet. Wegen ihrer oberflächenaktiven Eigenschaften sind die Polymerisate unter anderem auch zum Veredeln vn Papier und Textilien geeignet.

Da die azomethingruppenhaltigen Polymerisate zum Teil aus optisch aktiven Aminen hergestellt wurden, werden die Produkte auch als Füllkörper für die Racemattrennung verwendet.

Die in den folgenden Beispielen genannten Teile beziehen sich jeweils auf das Gewicht.

## Beispiel 1

### Polymerisation des Azomethins III

1 Teil III wird mit 0,01 Teilen Azodiisobutyronitril und 2 Teilen Benzol versetzt und nach Spülen unter Argon unter Druck auf 80° C 24 Stunden erhitzt, anschließend 24 Stunden nach Zugabe von weiteren 0,01 Teilen Azodiisobutyronitril auf 100° C erhitzt. Es werden 0,5 Teile eines Polymeren vom K-Wert 28 erhalten.

## Beispiel 2

### Polymerisation des Azomethins IV

IV wurde entsprechend dem Derivat III des Beispiels 1 polymerisiert. Es wurden 0,4 Teile eines Polymeren vom K-Wert 26,5 erhalten.

## Beispiel 3

### Herstellung eines makroporösen Polymers

Derivat III und Styrol wurden im Verhältnis 1 : 1 jeweils 1 Teil entsprechend dem Derivat III des Beispiels 1 polymerisiert. Es wurden 1,95 Teile eines Polymers vom K-Wert 54 erhalten. Das

Copolymerisat mit einem Anteil von 50 Gew.-% an einpolymerisiertem III ist in Dimethylformaldehyd, Toluol und anderen üblichen Lösungsmitteln unlöslich, durch Umsetzen mit 0,5 Teilen Diaminodiphenyläther 1 Stunde bei 100°C in Dimethylformamid ensteht ein unlösliches Produkt. Es dient in pulvriger Form als unlösliches Säulenfüllmaterial.

## Patentanspruch

Polymerisate mit K-Werten von 20 bis 140, die Struktureinheiten der allgemeinen Formel (I):

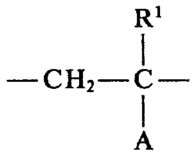 I

enthalten, worin

$R^1$ = H oder $CH_3$

A = 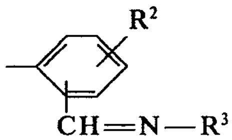 oder 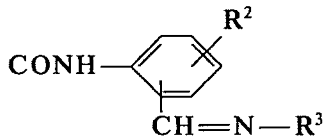

wobei

$R^2$ = H, OH, O-Alkyl, Alkoxyalkyl oder $O-Si(CH_3)_3$ und

$R^3$ = OH, $NH-CO-NH_2$, $C_1$- bis $C_{12}$-Alkyl, $C_6$- bis $C_{12}$-Cycloalkyl, $C_6$- bis $C_{14}$-Aryl oder

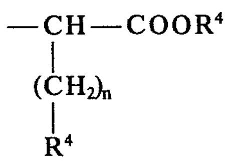

worin

$R^4$ = $C_1$- bis $C_{12}$-Alkyl, $C_6$- bis $C_{12}$-Cycloalkyl und $C_6$- bis $C_{14}$-Aryl und n = 0 oder 1

bedeuten.

## Claim

Polymers having a K value of from 20 to 140, which contain structural units of the general formula (I)

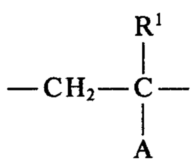 I

where

$R^1$ = H or $CH_3$

A = 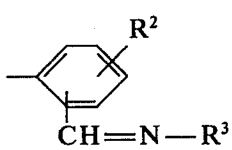 or 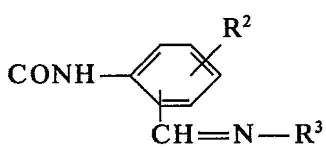

where

$R^2$ = H, OH, O-alkyl, alkoxyalkyl or $O-Si(CH_3)_3$ and

$R^3$ = OH, $NH-CO-NH_2$, $C_1-C_{12}$-alkyl, $C_6-C_{12}$-cycloalkyl, $C_6-C_{14}$-aryl or

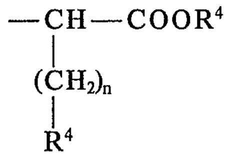

where

$R^4$ = $C_1-C_{12}$-alkyl, $C_6-C_{12}$-cycloalkyl and $C_6-C_{14}$-aryl and n = 0 or 1.

**Revendication**

Polymères avec des valeurs K de 20 à 140, contenant des unités structurales de la formule générale I

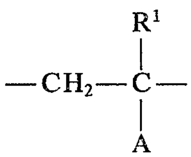

(I)

dans laquelle

$R^1$ = H ou $CH_3$ et

A = 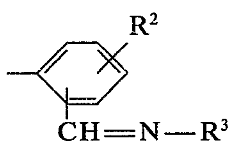 ou 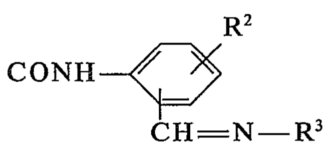

avec

$R^2$ = H, OH, O-alcoyle, alcoxy-alcoyle ou $O-Si(CH_3)_3$ et

$R^3$ = OH, $NH-CO-NH_2$, alcoyle en $C_1$ à $C_{12}$, cycloalcoyle en $C_6$ à $C_{12}$, aryle en $C_6$ à $C_{14}$ ou

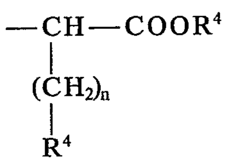

ou

$R^4$ = alcoyle en $C_1$ à $C_{12}$, cycloalcoyle en $C_6$ à $C_{12}$ ou aryle en $C_6$ à $C_{14}$ et n = 0 ou 1.